# FASCICULE DE BREVET EUROPEEN

(11) **EP 0 448 429 B1**
(45) Date de publication et mention de la délivrance du brevet: **06.07.1994**
(21) Numéro de dépôt: 91400529.3
(22) Date de dépôt: 27.02.1991
(51) Int. Cl.: H04N 13/02

(54) **Procédé de réglage de la convergence stéréoscopique dans un équipement de prise de vue stéréoscopique**
Verfahren zum Einstellen der stereoskopischen Konvergenz in einer stereoskopischen, bilderzeugenden Vorrichtung
Method for adjusting the stereoscopic convergence in a stereoscopic imaging equipment

(30) Priorité: 19.03.1990 FR 9003459
(43) Date de publication de la demande: 25.09.1991
(73) Titulaire: FRANCE TELECOM, 75015 Paris (FR); TELEDIFFUSION DE FRANCE, 75932 Paris Cédex 15 (FR)
(72) Inventeur: Choquet, Bruno, F-35200 Rennes (FR)
(74) Mandataire: Rodhain, Claude

(56) Documents cités:
- FR-A- 2 517 916
- FR-A- 2 555 846

## Description

L'invention concerne un procédé de réglage de la convergence stéréoscopique dans un équipement de prise de vue stéréoscopique, pour augmenter ou diminuer l'angle de convergence stéréoscopique, du type dans lequel l'équipement comprend deux dispositifs de formation d'images, tels que des caméras vidéo, à tube, "CCD" ou analogue, disposés symétriquement par rapport à un axe optique moyen. Un tel équipement est connu par exemple de la demande de brevet français FR-A-2 517 916 (THOMSON-CSF). L'équipement engendre des signaux vidéo représentatifs d'une image utile droite et d'une image utile gauche respectivement d'une scène observée, de manière que la restitution des images utiles, sur un écran de télévision stéréoscopique par exemple, permet d'obtenir de façon connue une visualisation en relief de la scène observée. En fonction des conditions de prise de vue, un objet de la scène observée peut être vu à la surface de l'écran de télévision, "à l'intérieur du téléviseur" ou "devant" l'écran de télévision. L'effet de relief est donc imposé par les conditions de prise de vue. L'angle de convergence stéréoscopique des axes de prise de vue, respectivement droit et gauche, est un paramètre fondamental des conditions de prise de vue, sa variation rendant les effets de relief indiqués ci-dessus.

L'invention s'étend à un équipement de prise de vue pour la mise en oeuvre du procédé de réglage de la convergence stéréoscopique.

On connaît déjà des équipements de prise de vue stéréoscopiques du type indiqué ci-dessus. Chaque caméra est montée sur un support tournant entraîné par des micro-moteurs. Le réglage de la convergence stéréoscopique est obtenu en positionnant les axes optiques des caméras selon un angle de convergence désiré par un actionnement convenable des micro-moteurs.

Toutefois, ce type de réglage mécanique de l'angle de convergence stéréoscopique nécessite un appareil de manoeuvre des caméras très sophistiqué et délicat à utiliser pour obtenir une bonne précision de réglage. En outre, de tels appareils sont sujets à des disfonctionnements fréquents, notamment en cas de transport de l'équipement de prise de vue stéréoscopique.

L'invention se propose de remédier aux inconvénients ci-dessus cités. Notamment un premier objectif de l'invention est de fournir un procédé de réglage de la convergence stéréoscopique qui ne fasse pas appel à des moyens mécaniques tels que ceux connus dans l'art antérieur.

Un second objectif de l'invention est de fournir un procédé de réglage de la convergence stéréoscopique qui soit précis et très fiable.

Un troisième objectif de l'invention est de fournir un équipement de prise de vue stéréoscopique pour la mise en oeuvre du procédé qui intègre des moyens électroniques pour le réglage de la convergence, ces moyens électroniques étant peu coûteux et rendant l'ensemble de l'équipement homogène dans sa technologie.

A cet effet, l'invention concerne un procédé de réglage de la convergence stéréoscopique tel que défini dans la revendication 1.

On remarque que selon le procédé de l'invention, les dispositifs de formation d'image ou caméras restent fixes l'un par rapport à l'autre indépendamment du réglage de l'angle de convergence. Ceci est particulièrement avantageux pour la conception du support des caméras, un support classique pouvant être utilisé.

L'invention s'étend à un équipement de prise de vue stéréoscopique pour la mise en oeuvre du procédé selon l'invention et qui est défini dans la revendication 2.

Outre le fait que les dispositifs électroniques cités ci-dessus constituent un ensemble homogène avec les dispositifs de formation d'image, lesquels sont à base eux-mêmes d'électronique, ces dispositifs électroniques pourront avantageusement s'incorporer dans le boîtier de chaque caméra, évitant ainsi tout risque de dégradation et donc de mauvais fonctionnement. Par ailleurs, le réglage de la convergence stéréoscopique est commandé par un circuit de commande, par exemple du type à microprocesseur tel qu'un microcalculateur, procurant une grande souplesse de travail et notamment des possibilités étendues d'effets de prises de vue.

Selon encore une autre caractéristique de l'invention, l'équipement comprend en outre des seconds moyens de mémorisation reliés en parallèle auxdits premiers moyens de mémorisation entre lesdits moyens de conversion vidéo et fonctionnant symétriquement et alternativement en lecture et en écriture.

D'autres caractéristiques et avantages de l'invention apparaîtront encore mieux à la lecture de la description qui va suivre donnée à titre d'exemple illustratif et des dessins annexés dans lesquels :

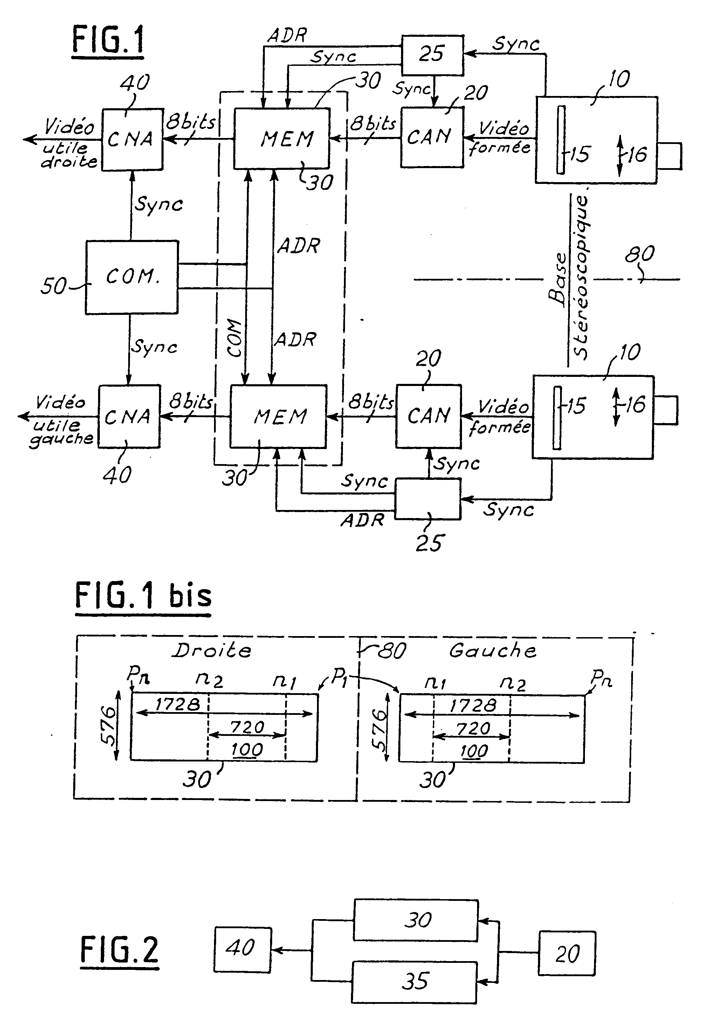

- la figure 1 représente, de façon schématique, un équipement de prise de vue stéréoscopique selon l'invention,
- la figure 1bis illustre de façon schématique, le mécanisme d'extraction des données numériques dans les premiers moyens de mémorisation,
- la figure 2 représente de façon schématique les premiers et seconds moyens de mémorisation des données numériques dans l'équipement de prise de vue stéréoscopique selon l'invention.

En se reportant à la figure 1, l'équipement de prise de vue stéréoscopique, représenté à titre d'exemple non limitatif, comprend deux dispositifs de formation d'images 10, tels que des caméras vidéo, à tube, "CCD" ou analogue, disposés symétriquement par rapport à un axe optique moyen 80. Les caméras 10 sont fixées sur un support non représenté avec une base stéréoscopique déterminée et réglable.

Les caméras 10 sont conçues pour engendrer des signaux vidéo représentatifs d'une image droite et d'une image gauche d'une scène observée. Chaque caméra comprend de façon connue un dispositif optique 16 de focalisation, tel que des lentilles, et un capteur d'image 15 dont la normale est parallèle à l'axe optique du dispositif optique 16. Les deux capteurs d'image 15 dans les caméras 10 sont agencés de préférence pour être alignés dans un même plan. Les capteurs d'image, présentant une forme sensiblement rectangulaire, sont choisis de manière que leur dimension horizontale, exprimée en nombre de points image par ligne d'image est supérieure à la dimension horizontale d'une image utile. Une image vidéo utile (selon le standard européen) est constituée de 576 lignes de 720 points image chacune. Les capteurs d'image utilisés dans l'équipement de prise de vue selon l'invention ont une dimension horizontale nettement supérieure à 720 points, par exemple une dimension horizontale de 1728 points. De tels capteurs sont disponibles sur le marché, et l'on citera à titre d'exemple les capteurs Tektronix TK 2048 M.

Une circuiterie électronique non représentée sur cette figure est intégrée à chaque capteur d'image permettant d'engendrer un signal vidéo représentatif d'une image formée de la scène observée, les dimensions de l'image étant conformes à celles du capteur d'image. On comprendra que chaque caméra 10 est équipée du même capteur et de la même circuiterie électronique.

Chaque capteur 15 est relié en sortie, via la circuiterie électronique, à un convertisseur analogique numérique 20 recevant en entrée le signal vidéo représentatif d'une image formée (par exemple l'image droite) et fournissant en sortie des données numériques (par exemple sur 8 bits) représentatives de la luminescence des points image de l'image formée. Chaque convertisseur vidéo 20 est relié en sortie à un moyen de mémorisation 30, tel qu'une mémoire vive, pour enregistrer lesdites données numériques. De préférence, les mémoires 30 sont agencées pour mémoriser les données numériques sous la forme d'une table de 1728 x 576 données numériques correspondant à la configuration des points image d'une image formée. Chaque mémoire 30 est donc chargée, ligne par ligne de points image. Un circuit électronique 25 est agencé d'une part pour synchroniser les moyens de conversion vidéo 20 et les moyens de mémorisation 30 configurés en écriture à partir de signaux de synchronisation délivrés par les caméras 10 et pour placer les données numériques engendrées par les moyens de conversion vidéo 20, dans les emplacements mémoires qui leur sont affectés dans les mémoires 30.

La lecture de chaque mémoire 30 selon une fenêtre glissante 100, comme représenté en figure 1bis, dimensionnée selon la taille d'une image utile (720 x 576 points images), détermine une image utile, l'angle de convergence étant directement fonction de la position horizontale de ladite fenêtre 100 dans chaque mémoire 30. Pour rendre plus facile la compréhension de l'invention, on considèrera que chaque image formée par les caméras 10 est représentée sous la forme d'un rectangle correspondant à la configuration virtuelle en table des mémoires 30. Ainsi, chaque image formée est définie par un premier point image P₁ et un dernier point image Pₙ d'une ligne d'image et enregistrée dans chaque mémoire 30 sous forme numérique, tandis que chaque fenêtre de lecture 100 est définie par un premier point image N₁ et un dernier point image N₂ d'une ligne d'image utile. On remarquera, comme représenté sur la figure 1bis, que les fenêtres de lecture 100 sont positionnées de façon symétrique dans chaque mémoire 30 (par rapport à l'axe optique moyen 80). On considèrera aussi que N₁, N₂ représentent des adresses colonnes de la table de données numériques, l'écart entre N₁ et N₂ étant de 720. Les axes de prise de vue joignant le centre de l'image formée sur chaque capteur au centre de l'optique 16 qui lui est associé sont convergents, l'angle de convergence variant de 0 (convergence à l'infini) à environ 50 milliradians, cette dernière valeur dépendant de la taille du capteur choisi et de la focale de l'optique utilisée. Chaque capteur 15 est disposé dans le dispositif de formation d'image 10 de sorte que le premier point image N₁ d'une ligne d'image utile corresponde au premier point image P₁ d'une ligne d'image formée pour une convergence nulle. La dimension horizontale de ce capteur 15 a une valeur telle que le dernier point image N₂ d'une ligne d'image utile corresponde au dernier point image Pₙ d'une ligne d'image formée pour une convergence maximale, par exemple de 50 milliradians. Dans l'exemple décrit on considèrera que P₁ a pour valeur 1 et Pₙ a pour valeur 1728. Les positions différentes des premier et dernier points image N₁, N₂ d'une image utile par rapport aux premier et dernier points image P₁, Pₙ d'une image formée, l'écart entre N₁ et N₂ étant constant, déterminent une pluralité d'angles de convergence stéréoscopique de 0 à 50 milliradians par exemple. On comprendra donc qu'en rapprochant les fenêtres de lecture 100 l'une par rapport à l'autre on tend vers un angle de convergence stéréoscopique nul tandis qu'en les éloignant l'une par rapport à l'autre, on tend vers un angle de convergence d'une valeur maximale déterminée par les caractéristiques des dispositifs de formation d'image.

Chaque mémoire 30 est reliée à un moyen de commande 50, tel qu'une unité de traitement du type à microprocesseur, le moyen de commande 50 étant agencé pour engendrer des signaux d'adresse sélectionnant des emplacements mémoires dans les mémoires 30, de manière à extraire de la table de données numériques par une commande de lecture, seulement une partie de cette table correspondant à une fenêtre de lecture 100, en fonction d'une valeur d'angle de convergence prédéterminée et pour fournir lesdites données numériques extraites à un convertisseur vidéo numérique analogique 40. Chaque convertisseur vidéo 40 engendre un signal vidéo représentatif de l'image utile correspondant à une fenêtre de lecture 100. Les convertisseurs vidéo 40 peuvent avantageusement être synchronisés par le moyen de commande 50. Les signaux d'adresses engendrés par le moyen de commande 50, sont tels qu'ils actionnent tous les emplacements mémoires des mémoires 30 dont le numéro de colonne dans la table de données numériques est compris entre N₁ et N₂.

Bien entendu, on comprendra que les mémoires 30 fonctionnent de façon synchrone en lecture et que la phase de lecture des mémoires 30 est déclenchée après l'enregistrement complet des données numériques représentatives d'une ligne d'image, d'une trame d'image, ou d'une image formée. Après chaque lecture des mémoires 30, celles-ci sont automatiquement mises à jour en fonction des nouvelles images formées de manière à répéter l'opération décrite ci-dessus. L'angle de convergence peut être imposé par un opérateur à l'aide d'un clavier ou analogue relié au moyen de commande 50 ou imposé automatiquement par des moyens électroniques internes à l'équipement de prise de vue stéréoscopique. On voit donc que le réglage de la convergence stéréoscopique est effectuée selon le procédé de l'invention uniquement par un déplacement d'une fenêtre de lecture dans des moyens de mémorisation des données numériques représentatives de la luminescence des points image des images formées.

De façon préférentielle, on prévoit des seconds moyens de mémorisation 35, du type mémoire vive, identiques aux mémoires 30, reliés en parallèles aux premiers moyens de mémorisation 30 entre les deux convertisseurs vidéo 20, 40, comme représenté en figure 2. Les premiers et seconds moyens de mémorisation 30, 35 travaillent symétriquement et alternativement en lecture et écriture, le premier enregistrant les données numériques fournies par le convertisseur vidéo 20, le second fournissant les données numériques correspondant à une fenêtre de lecture au convertisseur vidéo 40, et alternativement. Ainsi, on peut réduire la quantité de données numériques à enregistrer dans les mémoires 30, 35, chaque mémoire mémorisant les données numériques représentatives d'une ligne d'image, par exemple sa capacité mémoire étant réduite à environ 2 kilo-octets.

Bien entendu, dans le cas d'un équipement de prise de vue en couleur, les caméras 10 comprennent trois capteurs 15 disposés en arrière de l'optique 16. Dans ce cas, il faudra prévoir trois mémoires 30 et trois mémoires 35 associées respectivement à chaque capteur 15. D'autres circuits de l'équipement de prise de vue devront aussi être triplés tels que les convertisseurs vidéo 20, 40.

Bien entendu, l'invention n'est pas limitée à l'exemple de réalisation ci-dessus décrit et on pourra prévoir d'autres variantes sans pour cela sortir du cadre de l'invention.

## Revendications

1. Procédé de réglage de l'angle de convergence stéréoscopique dans un équipement de prise de vue stéréoscopique, comprenant deux dispositifs de formation d'images (10) d'une scène observée, les dispositifs de formation d'images étant disposés symétriquement par rapport à un axe optique moyen (80) pour engendrer des premiers signaux vidéo représentatifs d'une image gauche et d'une image droite de la scène observée, caractérisé en ce que les images gauche et droite sont des images surdimensionnées de la scène observée et en ce que :
on convertit, sous forme numérique, lesdits premiers signaux vidéo pour engendrer des données numériques représentatives de points image des images surdimensionnées gauche et droite,
on sélectionne, en fonction de l'angle de convergence stéréoscopique désiré, une partie des points image des images surdimensionnées gauche et droite en positionnant deux "fenêtres de lecture" des points images présentant une pluralité de lignes d'image utiles définie chacune par un premier point image de même rang (N1) et un dernier point image de même rang (N2), les rangs (N1, N2) desdits premier et dernier points image d'une ligne d'image utile étant compris entre les rangs (P1, Pn) d'un premier et un dernier points image d'une ligne d'image surdimensionnée
on convertit sous forme analogique les points image sélectionnés pour engendrer des seconds signaux vidéo représentatifs d'une image gauche et d'une image droite utiles de la scène observée.

2. Un équipement de prise de vue stéréoscopique comprenant deux dispositifs de formation d'images (10) d'une scène observée, les dispositifs de formation d'images étant disposés symétriquement par rapport à un axe optique moyen (80) les dispositifs de formation d'images comportant chacun un capteur optoélectrique (15) pour engendrer des premiers signaux vidéo, caractérisé en ce que :
lesdits premiers signaux vidéo sont représentatifs d'une image gauche et d'une image droite surdimentionnées de la scène observée, et
en ce qu'il comprend des moyens de conversion analogique/numérique (20) reliés aux capteurs optoélectriques pour engendrer des données numériques représentatives des points image des images surdimensionnées gauche et droite à partir desdits premiers signaux vidéo, des premiers moyens de mémorisation (30) reliés aux moyens de conversion analogique/numérique (20) pour enregistrer lesdites données numériques, des moyens de commande (50) recevant en entrée une valeur d'angle de convergence stéréoscopique et agencés pour extraire des moyens de mémorisation (30), une partie des données numériques enregistrées en réponse à ladite valeur d'angle de convergence et représentant deux "fenêtres de lecture" définie chacune par un premier point image de même rang N1 et un dernier point image de même rang N2, les rangs (N1, N2) desdits premier et dernier points image d'une ligne d'image utile étant compris entre les rangs (P1, Pn) d'un premier et d'un dernier points image d'une ligne d'image surdimensionnée, et des moyens de conversion numérique/analogique (40) recevant lesdites données numériques extraites pour fournir des seconds signaux vidéo représentatifs respectivement d'une image utile droite et d'une image utile gauche de la scène observée.

3. L'équipement selon la revendication 2, comprenant en outre des seconds moyens de mémorisation (35) reliés en parallèle audit premier moyen de mémorisation (30) entre lesdits moyens de conversion vidéo (20, 40) et fonctionnant symétriquement et alternativement en lecture et en écriture.

## Patentansprüche

1. Verfahren zum Einstellen des stereoskopischen Konvergenzwinkels in einer stereoskopischen, bilderzeugenden Vorrichtung, die zwei Bilderzeugungseinrichtungen (10) einer beobachteten Szene aufweist, wobei die Bilderzeugungseinrichtungen symmetrisch bezüglich einer mittleren optischen Achse (80) angeordnet sind, um erste Videosignale zu erzeugen, die repräsentativ für ein linkes Bild und ein rechtes Bild der beobachteten Szene sind, dadurch gekennzeichnet, daß das linke und das rechte Bild überdimensionierte Bilder der beobachteten Szene sind und daß:
man die ersten Videosignale in numerische Form umsetzt, um numerische Daten zu erzeugen, die repräsentativ für die Bildpunkte des überdimensionierten linken und rechten Bildes sind,
man in Abhängigkeit von dem gewünschten stereoskopischen Konvergenzwinkel einen Teil der Bildpunkte des überdimensionierten linken und rechten Bildes auswählt, indem man zwei "Lesefenster" der Bildpunkte positioniert, die eine Vielzahl von Nutzbildlinien darstellen, die jeweils durch einen ersten Bildpunkt derselben Reihe (N1) und einen letzten Bildpunkt derselben Reihe (N2) bestimmt sind, wobei die Reihen (N1, N2) des ersten und letzten Bildpunktes einer Nutzbildlinie zwischen den Reihen (P1, Pn) eines ersten und eines letzten Bildpunktes einer Linie eines überdimensionierten Bildes liegen
man die ausgewählten Bildpunkte in analoge Form überträgt, um zweite Videosignale zu erzeugen, die repräsentativ für ein linkes und ein rechtes Nutzbild der beobachteten Szene sind.

2. Stereoskopische, bilderzeugende Vorrichtung, die zwei Bilderzeugungseinrichtungen (10) einer beobachteten Szene aufweist, wobei die Bilderzeugungseinrichtungen symmetrisch bezüglich einer mittleren optischen Achse (80) angeordnet sind, wobei die Bilderzeugungseinrichtungen jeweils einen optoelektrischen Empfänger (15) aufweisen, um erste Videosignale zu erzeugen, dadurch gekennzeichnet, daß :
die ersten Videosignale repräsentativ für ein linkes und ein rechtes überdimensioniertes Bild der beobachteten Szene sind, und
daß sie analoge/Digital-Umsetzungseinrichtungen (20) aufweist, die mit den optoelektrischen Empfängern verbunden sind, um ausgehend von den ersten Videosignalen numerische Daten zu erzeugen, die repräsentativ für Bildpunkte des linken und rechten überdimensionierten Bildes sind, wobei erste Speichereinrichtungen (30) mit den analogen/Digital-Umsetzungseinrichtungen (20) verbunden sind, um die numerischen Daten zu sammeln, wobei Steuereinrichtungen (50) eingangs einen Wert des stereoskopischen Konvergenzwinkels empfangen, und sie angeordnet sind, um aus den Speichereinrichtungen (30) einen Teil der gesammelten numerischen Daten in Reaktion auf den Wert des Konvergenzwinkels auszulesen, und sie zwei "Lesefenster" darstellen, die jeweils von einem ersten Bildpunkt derselben Reihe N1 und einem letzten Bildpunkt derselben Reihe N2 bestimmt sind, wobei die Reihen (N1, N2) des ersten und letzten Bildpunktes einer Nutzbildlinie zwischen den Reihen (P1, Pn) eihes ersten und letzten Bildpunktes einer Linie des überdimensionierten Bildes liegen, und wobei analoge/Digital-Umsetzungseinrichtungen (40) die ausgelesenen numerischen Daten empfangen, um zweite Videosignale zu liefern, die jeweils repräsentativ für ein rechtes und ein linkes Nutzbild der beobachteten Szene sind.

3. Vorrichtung gemäß Anspruch 2, die außerdem zweite Speichereinrichtungen (35) aufweist, die parallel zur ersten Speichereinrichtung (30) zwischen den Videoumsetzungseinrichtungen (20, 40) geschaltet sind, und die symmetrisch und wechselweise im Lesen und Schreiben arbeiten.

## Claims

1. A process for regulating the angle of stereoscopic convergence in a stereoscopic imaging system, comprising two devices (10) for forming images of an observed scene, the image-forming devices being disposed symmetrically with respect to a median optical angle (80) to create first video signals representative of a left image and of a right image of the observed scene, characterised in that the left and right images are oversized images of the observed scene and in that:
the said first video signals are converted into a digital form to create digital data representative of pixels of the oversized left and right images,
a part of the pixels of the oversized left and right images is selected according to the desired angle of stereoscopic convergence by positioning two "read windows" of the pixels having a plurality of useful image lines each defined by a first pixel of the same row (N1) and a final pixel of the same row (N2), the rows (N1, N2) of the said first and final pixels of a useful image line being comprised between the rows (P1, Pn) of a first and a final pixel of an oversized image line
the selected pixels are converted into analogue form in order to create second video signals representative of a useful left image and a useful right image of the observed scene.

2. A stereoscopic imaging system comprising two devices (10) for forming images of an observed scene, the image-forming devices being disposed symmetrically with respect to a median optical axis (80), the image-forming devices each comprising an opto-electric sensor (15) to create first video signals, characterised in that:
the said first video signals are representative of an oversized left image and an oversized right image of the observed scene, and
it comprises means for analogue/digital conversion (20) connected to the opto-electric sensors in order to create digital data representative of the pixels of the oversized left and right images from the said first video signals, first means for memorisation (30) connected to analogue/digital conversion means (20) in order to store the said digital data, means for control (50) receiving at the input a value of angle of stereoscopic convergence and which means are designed to extract from the memorisation means (30) a part of the stored digital data in response to the said value of angle of convergence and representing two "read windows" each defined by a first pixel of the same row N1 and a final pixel of the same row N2, the rows (N1, N2) of the said first and final pixels of a useful image line being comprised between the rows (P1, Pn) of a first and of a final pixel of an oversized image line, and means for digital/analogue conversion (40) receiving the said extracted digital data in order to provide second video signals representative respectively of a useful right image and of a useful left image of the observed scene.

3. The system according to claim 2, comprising moreover second memorisation means (35) connected parallel to the said first memorisation means (30) between the said video conversion means (20, 40) and functioning symmetrically and alternately in reading and writing.
